# EUROPÄISCHE PATENTSCHRIFT

(11) **EP 2 612 403 B1**
(45) Veröffentlichungstag und Bekanntmachung des Hinweises auf die Patenterteilung: **28.11.2018**
(21) Anmeldenummer: 11767647.8
(22) Anmeldetag: 30.08.2011
(51) Int. Cl.: H01R 13/629, H01R 13/631, H01R 13/58, H01R 107/00, H01M 2/20, B60L 11/18

(54) **ELEKTRISCHE KOMPONENTE**
ELECTRICAL COMPONENT
COMPOSANT ÉLECTRIQUE

(30) Priorität: 30.08.2010 DE 102010035868
(43) Veröffentlichungstag der Anmeldung: 10.07.2013
(73) Patentinhaber: Phoenix Contact GmbH & Co. KG, 32825 Blomberg (DE)
(72) Erfinder: KROME, Karsten, 32756 Detmold (DE); TÜNKER, Manuel, 32694 Dörentrup (DE); ANDRESEN, Jens, 32825 Blomberg (DE); FELDNER, Ralf, 32760 Detmold (DE); FÜHRER, Thomas, 32825 Blomberg (DE); FRANKE, Jens, 32676 Lügde (DE)
(74) Vertreter: Michalski Hüttermann & Partner Patentanwälte mbB
(86) Internationale Anmeldenummer: PCT/EP2011/064902
(87) Internationale Veröffentlichungsnummer: WO 2012/028612

(56) Entgegenhaltungen:
- EP-A2- 0 519 264
- JP-A- 7 211 388
- JP-A- H07 267 020
- JP-A- 2009 043 693
- JP-A- 2009 163 990
- JP-U- H0 249 078
- US-A- 3 521 216
- US-A- 5 383 790
- US-B1- 6 431 902

## Beschreibung

Die vorliegende Erfindung betrifft eine elektrische Komponente mit einem Gehäuse und wenigstens einem Steckkontakt. Eine solche elektrische Komponente kann beispielsweise eine Batterie- oder Akkupack umfassen, welches für den austauschbaren Einsatz vorgesehen ist.

Im Stand der Technik sind Batterie- bzw. Akkupacks bekannt geworden, die beispielsweise in Elektrofahrzeugen, Gabelstaplern, Omnibussen oder in sonstigen auch ortsfesten Maschinen und Vorrichtungen oder dergleichen Verwendung finden. Nach einer bestimmten Betriebs- oder Fahrzeit muss ein solches Akkupack wieder geladen werden. Um den durchgehenden Betrieb zu gewährleisten, kann dazu das Akkupack ausgetauscht werden und in einer separaten Ladestation aufgeladen werden, während das Fahrzeug oder dergleichen mit einem anderen Akkupack in Betrieb bleiben kann.

Beim Aufladen solcher Akkupacks für den Betrieb an beispielsweise Omnibussen oder sonstigen Vorrichtungen wird in der Regel ein hoher Ladestrom eingesetzt, um eine schnelle Aufladung zu gewährleisten und den frühzeitigen Einsatz wieder zu ermöglichen. Deshalb werden solche Akkupacks mit elektrischen Stromstärken von bis zum 400 Ampere oder mehr aufgeladen, wobei sicherheitshalber eine Auslegung auf beispielsweise 500 Ampere oder mehr Betriebsstärke erfolgt. Bei solchen Stromstärken kann auch bei niedrigen Übergangswiderständen eine erhebliche Wärmebelastung auftreten, die zu einem starken Verschleiß der Kontaktflächen führen kann. Meist werden solche Kontaktflächen als planliegende Anschlüsse vorgesehen, die möglichst parallel gegen einen entsprechenden Kontaktanschluss an der Ladestation gedrückt werden, um einen möglichst guten Kontakt herzustellen. Wenn beispielsweise aber einem Omnibus mit einem Gabelstapler ein Batteriepack entnommen wird und mit dem Gabelstapler zur Ladestation verbracht wird, so ist ein Millimeter genaues Rangieren schwierig und erfordert beim Anschluss des Batteriepacks genaueste Fahrarbeiten des Fahrers des Gabelstaplers. Auch Winkelabweichungen beim Anfahren des Akkupacks in die Ladestation führen zu einem verschlechterten Übergangswiderstand, der zu einer erhöhten Abnutzung und zu einem schnelleren Verschleiß führt.

Aus der US 3 521 216 A ist ein Steckadapter mit zwei Steckkontakten bekannt, die an einem Steckergrundkörper gehalten sind. In dem Steckadapter ist ein Kontaktträger federnd verschiebbar gelagert. Zwischenkontakte sind zwischen Kontakten des Kontaktträgers federnd gehalten, um mit Kontakten eines Bodenbereichs des Kontaktträgers eine elektrisch leitende Verbindung herzustellen, wenn ein korrespondierender Stecker verbunden wird.

Aus der EP 0 519 264 A2 ist ein Elektrischer Verbinder mit: a) einem zweiteiligen Gehäuse, wobei die Teile einen Hohlraum bilden, in dem Kontakte angebracht sind, b) wobei die Kontakte einen ersten und einen zweiten Kontaktbereich aufweisen c) wobei das erste Gehäuseteil eine innere Öffnung aufweist, die einen Raum zwischen dem ersten und dem zweiten Gehäuseteil bildet, d) wobei sich das zweite Teil durch die Öffnung hindurcherstreckt, e) wobei die zweiten Kontaktbereiche der Kontakte in dem zweiten Gehäuseteil angebracht sind, f) wobei die zweiten Kontaktbereiche zur Verbindung mit einem weiteren Verbinder ausgelegt sind, g) wobei die ersten Kontaktbereiche mit einer Schaltungsplatte zu verlöten sind, die ersten Kontaktbereiche der Kontakte in dem ersten Gehäuseteil angebracht sind, und die ersten Kontaktbereiche und die zweiten Kontaktbereiche in dem ersten bzw. dem zweiten Gehäuseteil gehalten sind und ferner sich dazwischen erstrekkende Einrichtung aufweisen, die die Kontaktbereiche und die Gehäuseteile für eine relative begrenzte Bewegung in X-, Y- und Z-Richtung in federnd nachgiebiger Weise haltern, um ein Verbinden und Lösen des Verbinders mit minimaler Spannungsausübung auf die Gehäuseteile und die Kontaktbereiche zu erleichtern.

Die US 5 383 790 A beschreibt eine schwimmende, selbstausrichtende Verbinderanordnung zwischen zwei Platten, die relativ zueinander bewegbar sind. Die Verbinderanordnung enthält einen Stecker, einen Stecker und eine externe Steckdose. Der Aufnahmeflansch weist eine Vielzahl von Öffnungen auf, die jeweils eine innere konische Oberfläche und eine innere zylindrische Oberfläche aufweisen. Zur Befestigung des Aufnahmeflansches an einer Platte ist eine Vielzahl von selbstjustierenden Montageanordnungen vorgesehen. Jede selbstjustierende Befestigungsanordnung umfasst eine Öse, die durch den Flansch hindurch angeordnet und an der Platte befestigt ist. Die Öse hat eine äußere konische Oberfläche. Jede selbstjustierende Montageanordnung enthält ferner eine Ausrichtfeder, um eine Dämpfung zwischen dem Aufnahmeflansch und der Öse vorzusehen. Die Verbinderanordnung enthält ferner eine einstellbare Ausstoßanordnung in dem Aufnahmegehäuse zum Ausüben einer Ausstoßkraft auf die Steckerhülse. Die Vielzahl von selbstjustierenden Montageanordnungen stellen die richtige Verbindung zwischen dem Steckverbinder und dem Steckverbinder her, und die Steckdose ist mit dem Steckverbinder verbunden.

Aus der JP H07 267 020 A ist in Buchsenverbinder bekannt, der Anschlüsse hält und in dem eine vertiefte geneigte Führungsfläche ausgebildet ist, und der an einer Karosserieseiten-Säulenplatte befestigt ist. Ein männlicher Steckverbinder hält Anschlüsse. Außerdem ist daran eine vorstehende geneigte Führungsfläche ausgebildet, die beweglich schwimmend in den vertikalen und seitlichen Richtungen eines Fahrzeugs mit einem Befestigungsplattenkörper durch Federn gelagert ist. Der Befestigungsplattenkörper ist an einer vorderen Stirnfläche einer Schiebetür befestigt. Auch wenn durch Verstellen der Genauigkeit der Beschläge der Tür ein Versatz zwischen beiden Verbindern bewirkt wird, werden sie durch die geneigten Führungsflächen geführt und sind an der Schiebetür zum Zeitpunkt des Schließens angeordnet.

Es ist deshalb die Aufgabe der vorliegenden Erfindung, eine elektrische Komponente zur Verfügung zu stellen, welche einen verbesserten Kontakt bei leichter Anschlussmöglichkeit erlaubt.

Diese Aufgabe wird durch eine elektrische Komponente mit den Merkmalen des vorliegenden Hauptanspruchs gelöst. Bevorzugte Weiterbildungen der elektrischen Komponente sind Gegenstand der Unteransprüche. Weitere Vorteile und Merkmale der Erfindung ergeben sich aus dem Ausführungsbeispiel.

Eine erfindungsgemäße elektrische Komponente weist ein Gehäuse, einen Kontaktträger und wenigstens einen Steckkontakt auf. Dabei ist der Kontaktträger schwimmend an dem Gehäuse aufgenommen ist, und der Steckkontakt ist schwimmend an dem Kontaktträger aufgenommen, wobei durch die schwimmende Aufnahme jeweils ein seitlicher Versatz und ein Höhenversatz ermöglicht werden. Insbesondere sind mehrere Steckkontakte schwimmend an dem Kontaktträger vorgesehen.

Die erfindungsgemäße elektrische Komponente hat viele Vorteile. Ein erheblicher Vorteil der erfindungsgemäßen elektrischen Komponente ist die doppelt schwimmende Lagerung. Einerseits wird der Kontakt oder es werden die Steckkontakte schwimmend an dem Kontaktträger vorgesehen, der beispielsweise plattenförmig ausgebildet sein kann und als

Träger für den oder die Steckkontakte dient. Andererseits wird der gesamte Kontaktträger mit allen darauf vorgesehenen Steckkontakten schwimmend gelagert.

Das ermöglicht durch die schwimmende Lagerung des Kontaktträgers beispielsweise eine Grobanpassung des Kontaktträgers und weiterhin kann jeder einzelne Steckkontakt wiederum durch seine eigene schwimmende Lagerung bedingt beispielsweise verbleibende geringere Toleranzen ausgleichen. Dadurch wird ein besonders zuverlässiger Kontakt ermöglicht und auftretende Übergangswiderstände können erheblich reduziert werden. Die Verlustleistung wird reduziert und die Haltbarkeit kann vergrößert werden. Durch die höhere Lebensdauer bedingt, wird ein geringerer Wartungs- und Montageaufwand erreicht, was insgesamt zu einem günstigeren Betrieb der elektrischen Komponente führt.

In einer bevorzugten Weiterbildung ist zur schwimmenden Aufnahme des Kontaktträgers an dem Gehäuse wenigstens eine Ausgleichseinrichtung vorgesehen. Die Ausgleichseinrichtung dient insbesondere zur seitlichen Anpassung und/oder auch zur Winkelanpassung. Durch eine Winkelanpassung des Kontaktträgers wird eine besonders vorteilhaft elektrische Komponente zur Verfügung gestellt, bei der die elektrische Komponente zum Anschluss an eine weitere elektrische Komponente nur mit einer geringeren Winkelgenauigkeit herangeführt werden muss. Das erleichtert beim Einsatz einer solchen elektrischen Komponente an oder als Batteriepack den Betrieb erheblich. Wird beispielsweise eine als Batteriepack ausgeführte elektrische Komponente mit einem Gabelstapler zur einer Ladestation verbracht, so genügt eine weitaus geringere Anfahrgenauigkeit, da eine winkelmäßige Ausrichtung des Kontaktträgers relativ zu dem Gehäuse und somit dem gesamten Batteriepack ermöglicht wird. Zusätzlich kann durch die seitliche und auch in Höhenrichtung vorgesehene schwimmende Lagerung auch ein seitlicher Versatz und ein Höhenversatz ermöglicht werden.
Vorzugsweise ist die Ausgleichseinrichtung oder wenigstens eine Ausgleichseinrichtung an dem Gehäuse insbesondere starr befestigt. An der Ausgleichsausrichtung ist vorzugsweise der Kontaktträger aufgenommen, sodass über die Ausgleichseinrichtung eine schwimmende Lagerung des Kontaktträgers erfolgt.
Vorteilhafterweise weist die Ausgleichseinrichtung wenigstens einen Zentrierkonus auf, der an einer Öffnung des Kontaktträgers vorgesehen ist. Insbesondere hält der Zentrierkonus den Kontaktträger an der Öffnung, um über den Konus eine winkelmäßige und seitliche Ausrichtung des Kontaktträgers zu ermöglichen. Dabei ist es möglich, dass die Öffnung an dem Kontaktträger als Loch oder als Nut oder dergleichen ausgeführt ist. Möglich ist es, dass auf beiden Seiten des Kontaktträgers ein Zentrierkonus vorgesehen ist. Bevorzugt ist es aber auch, dass auf der einen Seite des Kontaktträgers der Zentrierkonus und auf der anderen Seite des Kontaktträgers eine Scheibe vorgesehen ist, sodass der Kontaktträger verliersicher zwischen dem Zentrierkonus und der Scheibe vorgesehen ist.
Vorteilhafterweise weist die Ausgleichseinrichtung eine Vorbelastungseinrichtung zur Vorbelastung in eine Grundposition auf. Insbesondere ist die
Vorbelastungseinrichtung als Feder ausgeführt oder umfasst wenigstens eine Feder. Beispielsweise kann eine Spiralfeder den Zentrierkonus in Richtung der Öffnung des Kontaktträgers drücken.

Eine weitere elektrische Komponente weist ein Gehäuse und wenigstens einen Steckkontakt auf. Wenigstens ein länglicher Führungsbolzen ist zur Führung der elektrischen Komponente beim Anschluss an eine weitere elektrische Komponente vorgesehen. Der Führungsbolzen weist quer zur seiner Länge wenigstens eine ringförmig vergrößerte Außenkontur auf.

Auch diese elektrische Komponente hat viele Vorteile. Ein besonderer Vorteil dieser elektrischen Komponente ist die ringförmig vergrößerte Außenkontur, wodurch der Zentrierbolzen nicht auf seiner gesamten Länge die vergrößere Außenkontur aufweist, sondern nur an einer oder mehreren Stellen. Das bedeutet, dass der Führungsbolzen, der in einer Buchse oder einer Führungsbuchse einer anderen elektrischen Komponente beim Kontaktieren geführt wird, nur an den Stellen der ringförmig vergrößerten Außenkontur eine geringere Toleranz aufweist.
Bevor die ringförmig vergrößerte Außenkontur die Führungsbuchse bzw. Buchse erreicht, liegt eine vergrößerte Toleranz vor, die bei deren Erreichen erheblich verringert wird, sodass ein zuverlässiger und präziser Anschluss ermöglicht wird.
Je nach Ausgestaltung und nach vorliegenden Bedingungen kann der Außendurchmesser des Führungsbolzens variieren.
Wenn beispielsweise der Einsatz der elektrischen Komponente mit einem Batteriepack erfolgt, welches ein Gewicht von 50, 100, 150 oder sogar 200 kg erreicht oder überschreitet, wird ein Außendurchmesser bevorzugt, der 10 mm und insbesondere 15 mm und vorzugsweise auch 20 mm Außendurchmesser überschreitet. Möglich sind auch größere Außendurchmesser von 25 mm, 30 mm, 40 mm oder 50 mm. Bei einem entsprechenden Gewicht der elektrischen Komponente ist eine entsprechende Stabilität des Führungsbolzens erforderlich, um eine sichere Führung zu gewährleisten.

Wenn hingegen das Gewicht und die erforderlichen Kräfte bei der Zentrierung der elektrischen Komponente geringer sind, kann auch ein erheblich kleinerer Außendurchmesser von beispielsweise 5 mm oder 2 mm oder ein noch geringerer Außendurchmesser vorgesehen sein, sodass der Führungsbolzen beispielsweise auch als Führungsstift bezeichnet werden kann.

In allen Ausgestaltungen ist es bevorzugt, dass der Führungsbolzen rohrförmig oder zylindrisch ausgebildet ist und insbesondere eine Spitze aufweist, die vorzugsweise kegelförmig oder dergleichen gestaltet ist. Möglich ist auch eine abgerundete oder abgestufte Spitze.

Vorzugsweise wird die ringförmig vergrößerte Außenkontur durch eine wallförmige Verdickung oder dergleichen erzielt. Möglich ist es aber auch, dass die ringförmig vergrößerte Außenkontur durch einzelne auf dem Umfang nach außen abstehende Noppen gebildet wird, die in ihrer Struktur insgesamt eine ringförmig oder wulstförmige Außenkontur bilden.

Vorteilhafterweise sind zwei oder mehr voneinander beabstandete ringförmig vergrößerte Außenkonturen an wenigstens einem Führungsbolzen vorgesehen. Die ringförmig vergrößerten Außenkonturen weisen dabei vorzugsweise einen definierten Abstand auf.
In allen Ausgestaltungen ist es vorgesehen, dass insbesondere zwei oder mehr Führungsbolzen vorgesehen sind.

Vorzugsweise weist der Führungsbolzen an der ringförmig vergrößerten Außenkontur einen um weniger als 10 % vergrößerten Außendurchmesser auf. Der Durchmesserunterschied ist vorzugsweise kleiner als 10 % und insbesondere kleiner als 5 %. Vorzugsweise ist der Durchmesserunterschied kleiner als 2 % und insbesondere liegt der Durchmesserunterschied in einem Bereich zwischen 0,03 % und 1,5 %. Wenn beispielsweise ein Außendurchmesser von 20 bis 25 mm vorliegt, kann der Außendurchmesser an der ringförmig vergrößerten Außenkontur 0,1 bis 3 mm vergrößert sein. Dadurch wird von der normalen Außenkontur schon eine Justage der elektrischen Komponente auf entsprechend 0,1 bis 3 mm erzielt. Wenn nun die ringförmig vergrößerte Außenkontur die Buchse bzw. die Führungsbuchse erreicht, wird die Toleranz deutlich gesenkt, sodass eine nochmals bessere Ausrichtung der elektrischen Komponente erfolgt.
In allen Ausgestaltungen weist wenigstens ein Führungsbolzen eine kegelförmig ausgebildete oder abgerundete Spitze auf. Besonders bevorzugt weist der Führungsbolzen über seiner Länge im Wesentlichen rundliche, gerundete oder vorzugsweise auch runde Querschnitte auf.

Gemäß einem anderen Aspekt ist es vorgesehen, einen Anschlussstecker zu Verfügung zu stellen, welcher über eine einfach montierbare und zuverlässige Zugentlastung verfügt.

Der Anschlussstecker verfügt über ein Anschlussgehäuse und wenigstens einen Steckkontakt und wenigstens eine Zugentlastungseinrichtung. Dabei weist das Anschlussgehäuse einen Grundkörper und einen Kontaktkörper auf. Die Zugentlastungseinrichtung umfasst eine Zugentlastung, die in dem Grundkörper eingelegt ist und die in dem Grundkörper durch den Kontaktkörper formschlüssig gesichert wird.

Der Anschlussstecker weist ebenfalls viele Vorteile auf. Besondere Vorteile des Anschlusssteckers sind die einfache Montage und der sichere Betrieb. Durch Einlegen der Zugentlastung in den Grundkörper und durch anschließendes Einbringen des Kontaktkörpers in den Grundkörper verhindert der Kontaktkörper das Entfernen der Zugentlastung aus dem Grundkörper. Durch die formschlüssige Verbindung, die durch den Kontaktkörper in dem Grundkörper gesichert wird, wird eine zuverlässige Zugentlastung zur Verfügung gestellt.
Vorzugsweise umfasst die Zugentlastung ein streifenförmiges Blech. Ein solches streifenförmiges Blech ist besonders einfach zu fertigen und weist bei der vorzugsweise vorgesehenen Ausgestaltung nur einen geringen Verschnitt auf.
Vorteilhafterweise greift wenigstens eine Haltenase an dem Grundkörper in eine Öffnung der Zugentlastung ein, um die formschlüssige Verbindung zu erzielen. Dabei kann zur Herstellung der Verbindung die Zugentlastung in den Grundkörper eingeführt werden. Durch Anlegen an eine Wandung werden die Haltenasen durch die Öffnungen der Zugentlastung geführt. Ein anschließendes Einführen des Kontaktkörpers in den Grundkörper verhindert ein Wegschwenken und ein Wiederentfernen der Zugentlastung aus dem Grundkörper und somit dem Anschlussstecker.
Besonders bevorzugt ist der Grundkörper hohl ausgebildet, um darin die Zugentlastung und die Kontaktkörper aufzunehmen. In allen Ausgestaltungen sind an dem Kontaktkörper die einzelnen Kontakte vorgesehen. Dabei können die Kontakte zur Datenübertragung und/oder zur Leistungsübertragung vorgesehen sein.
Die elektrische Komponente verfügt vorzugsweise über mehrere Steckkontakte und wenigstens einen Anschlussstecker.

Weitere Vorteile und Merkmale ergeben sich aus der Beschreibung des Ausführungsbeispiels, welches im Folgenden mit Bezug auf die beiliegenden Figuren erläutert wird.
Darin zeigen:
- Fig. 1: eine stark schematische Darstellung eines Fahrzeugs mit einem Akkupack als elektrischer Komponente;
- Fig. 2: eine perspektivische Ansicht einer erfindungsgemäßen elektrischen Komponente;
- Fig. 3: eine perspektivische Ansicht einer anderen elektrischen Komponente;
- Fig. 4: eine Draufsicht auf die elektrische Komponente nach Fig. 2 in der Grundstellung;
- Fig. 5: eine Draufsicht auf die elektrische Komponente nach Fig. 2 in ausgelenkter Position;
- Fig. 6: eine schematische Ansicht eines Führungsbolzens einer elektrischen Komponente;
- Fig. 7: den Schnitt A-A aus Fig. 4;
- Fig. 8: einen erfindungsgemäße Anschlussstecker in Explosionsdarstellung;
- Fig. 9: eine Seitenansicht des Anschlusssteckers nach Fig. 8;
- Fig. 10: eine Draufsicht auf den Anschlussstecker nach Fig. 8; und
- Fig. 11: eine schematische Draufsicht auf die Zugentlastung des Anschlusssteckers nach Fig. 9

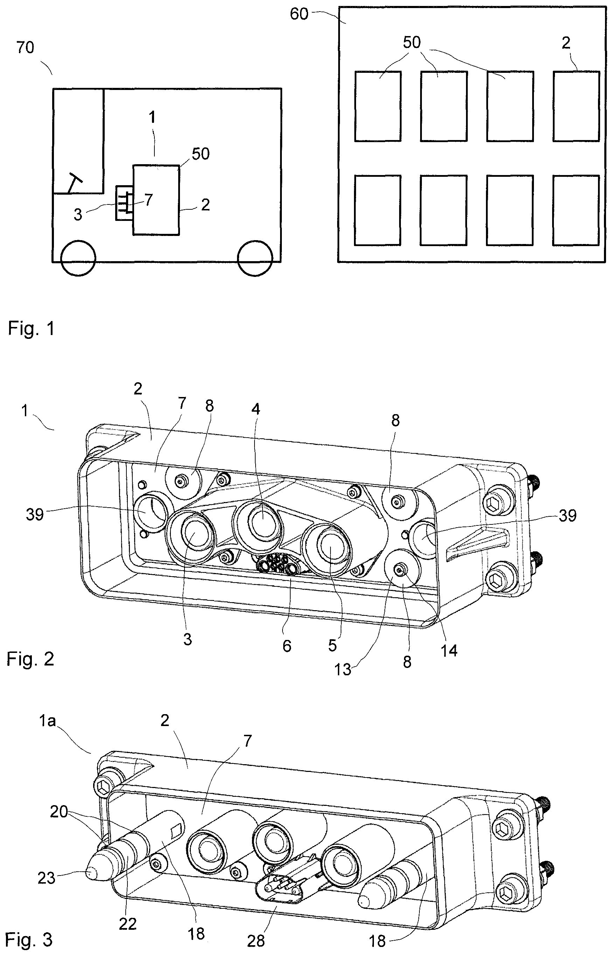

Im Folgenden wird mit Bezug auf die beiliegenden Figuren 1 bis 11 ein Ausführungsbeispiel der vorliegenden Erfindung erläutert.

In Fig. 1 ist in einer stark schematischen Darstellung ein Fahrzeug 70 sowie eine Ladestation 60 dargestellt. Das Fahrzeug 70 verfügt über ein Batteriepack 50, welches austauschbar an dem Fahrzeug 70 vorgesehen ist. Gegebenenfalls können auch mehrere Batteriepacks 50 an dem Fahrzeug vorgesehen sein.

Das Batteriepack 50 ist hier eine elektrische Komponente 1, die über ein Gehäuse 2 und Steckkontakte 3 an einem Kontaktträger 7 verfügt.

Neben dem Einsatz der erfindungsgemäßen elektrischen Komponente 1 an einem Fahrzeug ist auch ein Einsatz an einer stationären Vorrichtung oder an sonstigen mobilen Vorrichtungen oder Einrichtungen möglich.

Hier im Ausführungsbeispiel kann das Batteriepack 50 als elektrische Komponente 1 ein hohes Gewicht von 100, 150 oder sogar 200 kg aufweisen. Zum Austausch des Batteriepacks 50 kann ein hier nicht dargestellter Gabelstapler eingesetzt werden, der das Batteriepack 50 aus dem Fahrzeug 70 entnimmt und zu der Ladestation 60 verbringt, welche beispielsweise regalartig ausgebildet ist und über verschiedenste Ladeplätze für Batteriepacks 50 verfügt.

Der Gabelstapler oder ein Förder- oder Transportband oder dergleichen transportiert das Batteriepack 50 zu einem nicht besetzten Ladeplatz und schließt das Batteriepack 50 mit den Steckkontakten 3 bis 6 an die Ladestation 60 an.

Die elektrische Komponente 1 wird dabei zuverlässig mit der Ladestation 60 verbunden. Dafür sorgt hier die doppelt schwimmende Anordnung der Steckkontakte 3 bis 6 über den Kontaktträger 7 an dem Gehäuse 2 der elektrischen Komponente 1.

Fig. 2 zeigt den Bereich des Anschlusses der elektrischen Komponente 1, wobei die Steckkontakte 3 und 5 bei Gleichstromkontakten als plus- bzw. minus- Pol dienen, während der Steckkontakt 4 vorzugsweise als PE- Kontakt dient. Möglich ist es auch, noch weitere Steckkontakte vorzusehen. Hier im Ausführungsbeispiel ist ein weiterer Steckkontakt 6 vorgesehen, der hier über mehrere Pole verfügen kann und als Anschlussstecker 28 ausgeführt ist.

Gegenüber dem Gehäuse 2 ist der hier plattenförmig ausgebildete Kontaktträger 7 über im Ausführungsbeispiel insgesamt vier Ausgleichseinrichtungen 8 schwimmend gelagert aufgenommen. Die Ausgleichseinrichtungen 8 sind über Schrauben 14 fest und starr mit dem Gehäuse 2 verbunden. Die Scheiben 13 der Ausgleichseinrichtungen 8 sichern den Kontaktträger 7 vor einem unbeabsichtigten Lösen von dem Gehäuse 2.

An der elektrischen Komponente 1 sind Buchsen 39 in Form von Führungsbuchsen vorgesehen, mit denen wenigstens eine grobe Führung der elektrischen Komponente bei Anschluss der elektrischen Komponente 1 an einer elektrischen Komponente 1a erfolgt.

Eine elektrische Komponente 1a ist in Fig. 3 dargestellt und verfügt über Führungsbolzen 18, von denen hier im Ausführungsbeispiel zwei vorgesehen sind. Möglich ist es auch, eine elektrische Komponente 1 oder 1a mit nur einem Führungsbolzen 18 oder aber mit drei oder vier Führungsbolzen 18 vorzusehen.

Die elektrische Komponente 1a verfügt ebenfalls über Steckkontakte 3 bis 6, die mit den entsprechenden Steckkontakten an der elektrischen Komponente 1 steckbar verbindbar sind. Gegebenfalls kann die elektrische Komponente 1a ebenfalls über einen Kontaktträger 7 verfügen, der dann wiederum schwimmend gegenüber dem Gehäuse 2 der elektrischen Komponente 1a gelagert ist.

Die Führungsbolzen 18 sind über ihrer wesentlichen Länge rohrförmig ausgebildet und weisen hier drei ringförmige Verdickungen 20 auf, an denen jeweils ein Außendurchmesser 27 deutlich größer als der sonstige Außendurchmesser 26 ist. An der Spitze der Führungsbolzen 18 ist ein Spitze 23 vorgesehen, die abgerundet oder kegelförmig oder dergleichen ausgebildet sein kann und mit der eine erste und einfache Zentrierung der elektrischen Komponente 1 erfolgt, wenn die elektrische Komponente 1 mit den Buchsen 39 auf die Spitzen 23 der Führungsbolzen 18 aufgeschoben wird. Die ringförmigen Verdickungen 20, an denen nur eine geringe Toleranz zwischen dem Außendurchmesser 27 der ringförmigen Verdickung 20 und dem Innendurchmesser der Buchse 39 vorliegt, erlauben eine sehr präzise und reproduzierbare Kontaktierung der elektrischen Komponente 1.

Dadurch ist der Außendurchmesser 27 nur an den ringförmigen Verdickungen 20 vorliegt, wird ein Verkanten der elektrischen Komponente 1 beim Kontaktieren zuverlässig verhindert. Die Steckkräfte bleiben deshalb gering.

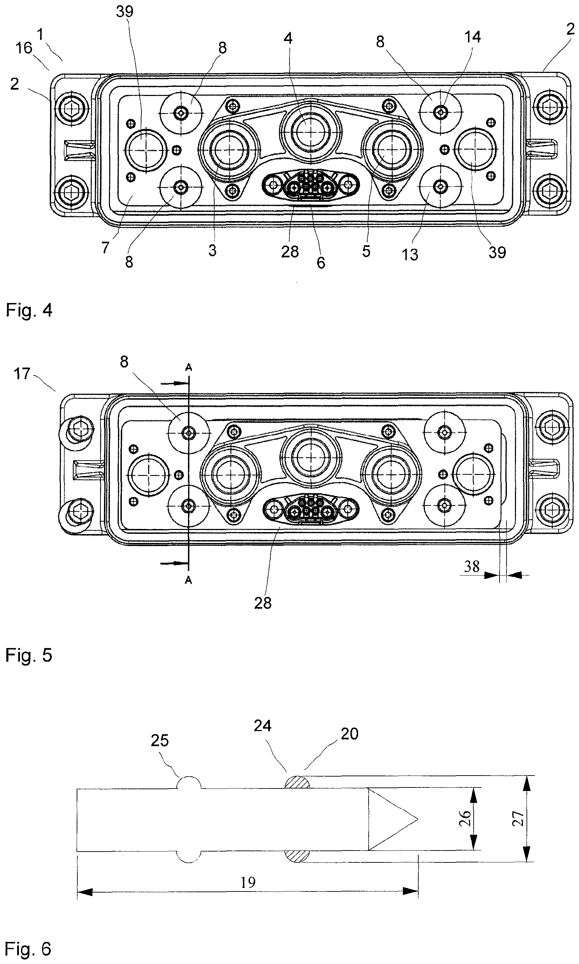

Fig. 4 zeigt eine Draufsicht auf den Kontaktbereich der elektrischen Komponente 1 mit dem Gehäuse 2 in der Grundposition 16. In der Grundposition 16 ist der Kontaktträger 7 in Ruheposition relativ zu dem Gehäuse 2. Das bedeutet, dass die Ausgleichseinrichtungen 8 nicht ausgelenkt sind.

Jeder einzelne Steckkontakt 3, 4, 5 und 6 ist jeweils schwimmend gegenüber dem Kontaktträger 7 angeordnet. Es liegt in wenigstens einer Richtung und hier sowohl in seitlicher als auch in Höhenrichtung eine gewisse Verschiebbarkeit des einzelnen Steckkontakts 3 bis 6 gegenüber dem Kontaktträger 7 vor. Beispielsweise kann die Verschiebbarkeit im Bereich zwischen 0,1 und 0,5 mm betragen. Dadurch wird auch nach Ausrichtung des Kontaktträgers 7 durch die Führungsbolzen 18 eine exakte Anpassung jedes einzelnen Steckkontaktes 3 bis 6 möglich, wodurch besonders hohe Steckkräfte beim Kontaktieren vermieden werden. Der Kontaktträger 7 hingegen kann vorzugsweise um einige Millimeter ausgelenkt werden.

In Fig. 5 ist die ausgelenkte Stellung 17 dargestellt, in welcher der Kontaktträger 7 gegenüber der Ruheposition 16 ausgelenkt wurde. Dabei hat in Höhenrichtung und in seitlicher Richtung eine Verschiebung um einen Abstand 38 stattgefunden, die beispielsweise jeweils bis zu 5 mm betragen kann. In anderen konkreten Ausgestaltungen sind kleinere oder auch größere Ausgleichsbewegungen möglich.

Fig. 6 zeigt eine stark schematische Seitenansicht eines Führungsbolzens 18 mit ringförmigen Außenkonturen 20 und 25.

Dabei kann eine solche Außenkontur 20 bzw. 25 durch eine ringförmige Verdickung entstehen oder aber durch einzelnen auf dem Umfang verteilt angeordnete Noppen 24 entstehen, die hier schematisch in geschnittener Form dargestellt sind. Wesentlich ist, dass an den Stellen der ringförmig vergrößerten Außenkonturen 20 und 25 ein vergrößerter Außendurchmesser 27 vorliegt, der beispielsweise um 0,1 bis 0,5 mm größer ist als der Außendurchmesser 26 der eigentlichen Außenoberfläche des Führungsbolzens 18. Der Führungsbolzen 18 erstreckt sich über eine Länge 19, wobei in gewissen und vordefinierten Abständen die ringförmig vergrößerten Außenkonturen 20 bzw. 25 vorgesehen sind.

Insbesondere ist die erste oder eine ringförmig vergrößerte Außenkontur 20 bzw. 25 so vorgesehen, dass ein einfaches Kontaktieren der Steckkontakte 3-6 erlaubt wird. Gerade wenn die Steckkontakte in Kontakt treten, sorgt die ringförmig vergrößerte Außenkontur 20 bzw. 25 für einen dichteren Sitz an der Buchse 39.

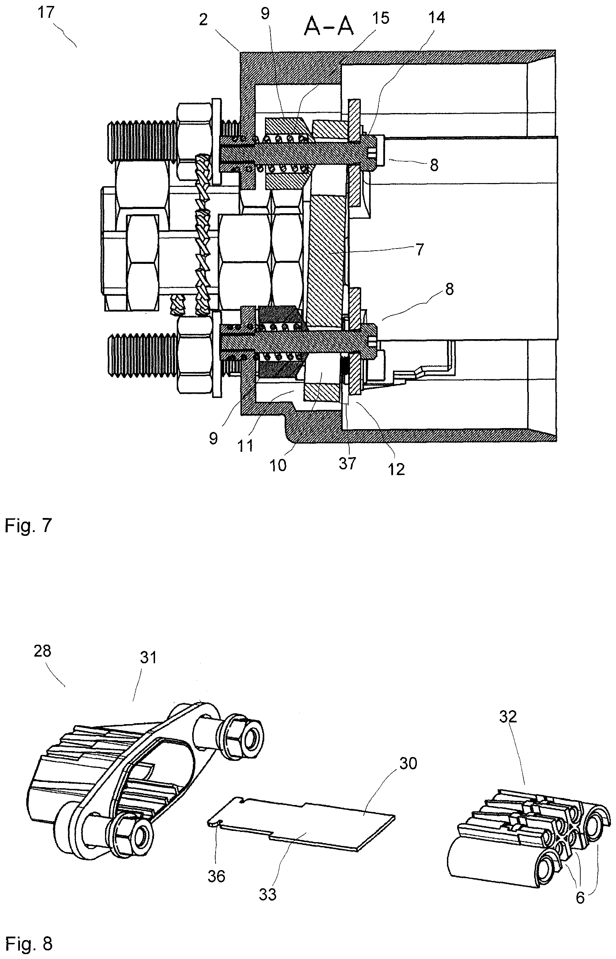

Fig. 7 zeigt den Schnitt A-A aus Fig. 5. Dabei ist die ausgelenkte Stellung 17 abgebildet, in der der Kontaktträger 7 um einen Abstand 38 seitlich verschoben wurde und in der, wie nun in Fig. 7 erkennbar, der Kontaktträger 7 um einen Winkel 37 gegenüber dem Gehäuse 2 ausgelenkt wurde. Dies ermöglicht beim Anschluss der elektrischen Komponente 1 an beispielsweise eine Ladestation 60 eine winkelmäßige Abweichung um den Winkel 37, der beispielsweise 1 Grad oder 5 Grad oder dergleichen betragen kann. Dadurch wird eine deutlich flexiblere Kontaktierung einer elektrischen Komponente 1 ermöglicht, die insbesondere bei großbauenden und schweren elektrischen Komponenten, wie Batteriepacks 50, zu einer erheblichen Vereinfachung der Kontaktierung führt.

Wie aus Fig. 7 zu entnehmen ist, weist jede Ausgleichseinrichtung 8 einen Zentrierkonus 9 auf, der auf einer Seite 11 des Kontaktträgers 7 angeordnet ist. Auf der anderen Seite 12 ist eine Scheibe 13 vorgesehen, die die Öffnung 10 in dem Kontaktträger 7 abdeckt und somit den Kontaktträger fest an dem Gehäuse 2 hält, obwohl eine winkelmäßige und seitliche Ausrichtung möglich ist. Als Spiralfedern ausgeführte Vorbelastungseinrichtungen 15 dienen zur Vorbelastung der Ausgleichseinrichtung in die Grundstellung 16.

Fig. 8 zeigt einen Anschlussstecker 28, der hier als Steckkontakt 6 in den vorhergehenden Figuren eingezeichnet wurde. Der Anschlussstecker 28 verfügt über einen Grundkörper 31 und einen Kontaktkörper 32 zur Aufnahme mehrere Steckkontakte. Weiterhin ist eine Zugentlastungseinrichtung 30 vorgesehen, die hier eine Zugentlastung 33 und Haltenasen 35 an dem Grundkörper 31 umfasst.

Die Zugentlastung 33 ist als streifenförmiges flaches Blech 34 ausgeführt, wodurch eine einfache Herstellung durch Ausstanzen mit wenig Verschnitt ermöglicht wird.

In der Nähe eines Endes der Zugentlastung 33 sind Öffnungen 36 an der Zugentlastung 33 vorgesehen, die mit Haltenasen 35 des Grundkörpers 31 zusammen wirken, um eine formschlüssige Verbindung zwischen der Zugentlastung 33 und dem Grundkörper 31 bzw. dem Anschlussgehäuse 29 zu bewirken.

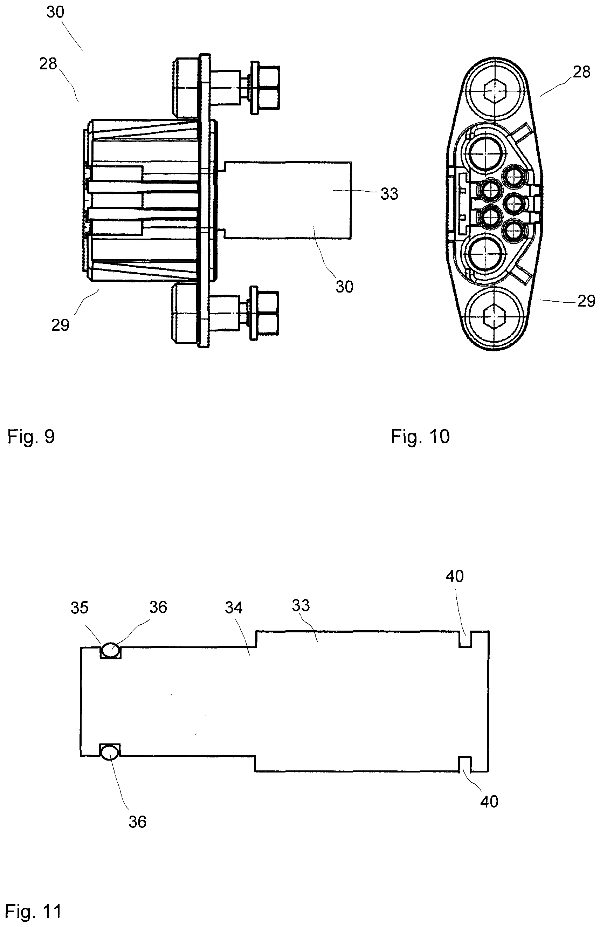

Der Anschlussstecker 28 ist in Fig. 9 in einer seitlichen Ansicht und in Fig. 10 in einer Draufsicht abgebildet. Der Anschlussstecker 28 kann neben - hier größer eingezeichneten - Leistungsanschlüssen auch über eine Reihe von Datenverbindungssteckern verfügen, sodass z. B. eine Elektronik oder ein Kleincomputer oder ein Lastgerät oder dergleichen mit der benötigten Energie versorgt werden kann, während gleichzeitig erzeugte oder verarbeitete Daten ausgetauscht werden können.

Während die Haltenasen 35 an den Öffnungen 36 im montierten Zustand in bzw. an dem Grundkörper 31 vorgesehen sind, ragt das andere Ende der Zugentlastung 33 aus dem Grundkörper 31 hinaus. An dem anderen Ende können Nuten 40 vorgesehen sein, um dort den Anschluss eines Kabelbinders oder anderer Komponenten zu ermöglichen. Zur Montage wird in den Grundkörper 31 des Anschlusssteckers 28 die Zugentlastung 33 mit den Öffnungen 36 zuerst in den Grundkörper 31 eingeführt. Anschließend werden die Öffnungen 36 über die Haltenasen 35 innerhalb des Grundkörpers 31 gestülpt und die Zugentlastung 33 wird an eine Innenwandung des Grundkörpers 31 angelegt. Anschließend kann der Kontaktkörper 32 mit den hier nicht eingezeichneten Kontakthülsen in den hohl ausgebildeten Grundkörper 31 eingeführt werden, sodass der Kontaktkörper 32 und die Zugentlastung 33 formschlüssig an dem Grundkörper 31 aufgenommen werden. Durch die Montage des Anschlusssteckers 28 auf einer Platine oder dem Kontaktträger 7 wird auch der Kontaktkörper 32 verliersicher an dem Grundkörper 31 aufgenommen.

Insgesamt ermöglicht die Erfindung den Einsatz einer elektrischen Komponente 1 in Form von beispielsweise Batterie- oder Akkupacks 50 oder anderen elektrischen Komponenten, bei denen eine zuverlässige und sichere Kontaktierung mit geringen Übergangswiderständen erfolgt, wobei die einzuhaltenden Toleranzen bei Herstellung der Steckverbindung relativ gering sind, da der Kontaktträger 7 und die einzelnen Steckkontakte 3 bis 6 jeweils schwimmend aufgenommen sind. Dadurch werden die Steckkräfte beim Herstellen der Verbindung und auch die Lösekräfte beim Lösen der Steckverbindung deutlich reduziert, während gleichzeitig für eine hohe stromübertragende Kontaktfläche gesorgt wird. Während die Toleranzen der miteinander kontaktierenden Steckkontakte jeweils bei z. B. 1/10 oder 1/100 mm liegen, können die Toleranzen beim Herstellen der Verbindung erheblich größer gewählt werden, sodass beispielsweise ein seitlicher Versatz von 5 mm oder dergleichen ausgleichbar ist.

Jeder einzelne Steckkontakt 3 bis 6 kann beispielsweise an einer Bohrung mit Übermaß angeordnet sein und sich so in alle seitlichen Richtungen um ein gewisses Maß bewegen.

Der erfindungsgemäße Anschlussstecker ist einfach aufgebaut und leicht zu montieren und wieder zu demontieren, sodass eine zuverlässige Funktion mit geringem Montageaufwand gewährleistet wird.

**Bezugszeichenliste**

| | |
|---|---|
| Anschlussklemme | 1 |
| Elektrische Komponente | 1 |
| Gehäuse | 2 |
| Steckkontakt | 3-6 |
| Kontaktträger | 7 |
| Ausgleichseinrichtung | 8 |
| Zentrierkonus | 9 |
| Öffnung | 10 |
| Seite | 11 |
| Seite | 12 |
| Scheibe | 13 |
| Schraube | 14 |
| Vorbelastungseinrichtung | 15 |
| Grundposition | 16 |
| Ausgelenkte Position | 17 |
| Führungsbolzen | 18 |
| Länge | 19 |
| Ringförmige Außenkontur | 20 |
| Zylinder | 21 |
| Rohr | 22 |
| Spitze | 23 |
| Noppe | 24 |
| Ringförmige Außenkontur | 25 |
| Außendurchmesser | 26 |
| Außendurchmesser | 27 |
| Anschlussstecker | 28 |
| Anschlussgehäuse | 29 |
| Zugentlastungseinrichtung | 30 |
| Grundkörper | 31 |
| Kontaktkörper | 32 |
| Zugentlastung | 33 |
| streifenförmiges Blech | 34 |
| Haltenase | 35 |
| Öffnung | 36 |
| Winkel | 37 |
| Seitlicher Versatz | 38 |
| Buchse | 39 |
| Nut | 40 |
| Batteriepack | 50 |
| Ladestation | 60 |
| Fahrzeug | 70 |

## Patentansprüche

1. Elektrische Komponente (1) mit einem Gehäuse (2), einem Kontaktträger (7) und wenigstens einem Steckkontakt (3, 4, 5, 6), wobei der Kontaktträger (7) schwimmend an dem Gehäuse (2) aufgenommen ist,
**dadurch gekennzeichnet, dass**
der Steckkontakt (3-6) schwimmend an dem Kontaktträger (7) aufgenommen ist, wobei
durch die schwimmende Aufnahme jeweils ein seitlicher Versatz und ein Höhenversatz ermöglicht werden.

2. Elektrische Komponente (1) nach Anspruch 1, wobei zur schwimmenden Aufnahme des Kontaktträgers (7) an dem Gehäuse (2) wenigstens eine Ausgleichseinrichtung (8) vorgesehen ist.

3. Elektrische Komponente (1) nach Anspruch 2, wobei die Ausgleichseinrichtung (8) an dem Gehäuse (2) befestigt ist und wobei der Kontaktträger (7) an der Ausgleichseinrichtung (8) aufgenommen ist.

4. Elektrische Komponente (1) nach Anspruch 2 oder 3, wobei die Ausgleichseinrichtung (8) wenigstens einen Zentrierkonus (9) aufweist, der an einer Öffnung (10) des Kontaktträgers (7) vorgesehen ist.

5. Elektrische Komponente (1) nach Anspruch 4, wobei auf einer Seite (11) der Öffnung (10) der Zentrierkonus (9) und auf der anderen Seite (12) eine Scheibe (13) vorgesehen ist.

6. Elektrische Komponente (1) nach mindestens einem der vorhergehenden Ansprüche 2 bis 5, wobei wenigstens eine Vorbelastungseinrichtung (15) zur Vorbelastung der Ausgleichseinrichtung (8) in eine Grundposition (15) vorgesehen ist.

## Claims

1. An electrical component (1) comprising a housing (2), a contact carrier (7) and at least one plug-in contact (3, 4, 5, 6), wherein the contact carrier (7) is held in a floating manner on the housing (2),
**characterised in that**
the plug-in contact (3-6) is held in a floating manner on the contact carrier (7), wherein
a lateral offset and a height offset are both made possible as a result of the floating holding.

2. The electrical component (1) according to claim 1, wherein, for the floating holding of the contact carrier (7), at least one compensating device (8) is provided on the housing (2).

3. The electrical component (1) according to claim 2, wherein the compensating device (8) is secured to the housing (2), and wherein the contact carrier (7) is held on the compensating device (8).

4. The electrical component (1) according to claim 2 or 3, wherein the compensating device (8) has at least one centring cone (9), which is provided at an opening (10) of the contact carrier (7).

5. The electrical component (1) according to claim 4, wherein the centring cone (9) is provided on one side (11) of the opening (10), and a disc (13) is provided on the other side (12).

6. The electrical component (1) according to at least one of preceding claims 2 to 5, wherein at least one preload device (15) for preloading the compensating device (8) in a starting position (15) is provided.

## Revendications

1. Composant électrique (1) doté d'un boîtier (2), d'un support de contact (7) et d'au moins un contact enfichable (3, 4, 5, 6), où le support de contact (7) est logé dans le boîtier (2) de manière flottante,
**caractérisé en ce que**
le contact enfichable (3 à 6) est logé sur le support de contact (7) de manière flottante, où
respectivement, un décalage latéral et un décalage en hauteur sont rendus possibles par la disposition flottante.

2. Composant électrique (1) selon la revendication 1, dans lequel au moins un dispositif de compensation (8) est prévu sur le boîtier (2) pour l'admission du support de contact (7) de manière flottante.

3. Composant électrique (1) selon la revendication 2, dans lequel le dispositif de compensation (8) est fixé sur le boîtier (2) et dans lequel le support de contact (7) est logé sur le dispositif de compensation (8).

4. Composant électrique (1) selon la revendication 2 ou 3, dans lequel le dispositif de compensation (8) présente au moins un cône de centrage (9) qui est prévu au niveau d'un orifice (10) du support de contact (7).

5. Composant électrique (1) selon la revendication 4, dans lequel le cône de centrage (9) est prévu sur un côté (11) de l'orifice (10) et un disque (13) est prévu sur l'autre côté (12).

6. Composant électrique (1) selon au moins l'une des revendications précédentes 2 à 5, dans lequel au moins un dispositif de précontrainte (15) pour une précontrainte du dispositif de compensation (8) est prévu dans une position de mise à la terre.
